# EUROPEAN PATENT APPLICATION

(11) **EP 4 557 168 A1**
(43) Date of publication of application: **21.05.2025**
(21) Application number: 23210897.7
(22) Date of filing: 20.11.2023
(51) Int. Cl.: G06N 3/0495, G06N 3/09

(54) **METHODS AND DEVICES FOR QUANTIZATION-AWARE TRAINING**

(71) Applicant: aiMotive LLC, 1025 Budapest (HU)
(72) Inventor: SAS, Illés, 1143 Budapest (HU); GARACZI, Tamás, 6000 Kecskemét (HU); ZÁMBÓ, Bence, 2013 Pomáz (HU)
(74) Representative: Vossius & Partner Patentanwälte Rechtsanwälte mbB

(57) **Abstract**

The present disclosure relates to a method for quantization-aware training of a neural network including a neural network processing unit, NPU, the method comprising the following steps: obtaining a plurality of tensors of the neural network from an NPU inference; replacing the corresponding tensors during the training of the neural network with the plurality of tensors of the neural network from the NPU inference.

## Description

The present disclosure generally relates to methods and devices for quantization-aware training of a neural network.

Recently, the usage of artificial intelligence in different aspects of life has become widely popular. Asking a simple question from our smartphone's voice assistant, upscaling a low-resolution image, or driving a modern automobile can all involve some kind of Artificial Intelligence (Al). The complexity of these Al applications can vary from a simple algorithm to a neural network that has a few million features.

Executing such a network in an adequate amount of time generally requires a real powerhouse computer. Neural Networks (NNs) tend to operate with 32-bit floating-point numbers which makes them commonly large. Working with NNs is suboptimal on a standard personal computer or even a workstation as they are made for generic usage. Fortunately, there is a solution that can tackle the previously mentioned problems and it is called Neural Network Processing Unit (NPU).

NPUs are optimized for the operations needed to be carried out to infer a neural network. They can execute models extremely efficiently, so less capable hardware can still be perfectly fine for complex neural networks. On the other hand, NPUs, unfortunately, have one common downside: they tend to operate with some kind of quantization so that they can work with small 8 or even lower-bit neural networks, which causes them to be less accurate compared to the reference model.

The problem can be mitigated by different techniques like quantization-aware training (QAT) or some kind of smart post-quantization methods (PTQ) that involve heuristics, but no universal solution exists so far. A technique that increases post-quantization accuracy is considered as quantization-aware training if the method includes further training on the original training dataset and makes the neural network learn how to operate with quantized tensors by learning the quantization noise. Whereas post-training quantization methods can be applied after the initial training of the neural network is finished and do not necessarily require labelled data. In some cases QAT can be considered as a PTQ method as well.

In addition, CN 114896876 A discloses quantization error compensation methods. The document discloses to minimize the error between the floating point and quantized int8 model inference. A small efficient network is introduced which is called compensation network. This compensation network is trained on the same training set as the original network and will predict the error between the quantized and the original model. The compensation network output and the quantized model output will be added to approximate the original model output better. The compensation network is a deep neural network, or it can adopt model structure adopts the CART algorithm in data mining or GBDT algorithm.

US 2022/0044109 A1 similarly relates to quantization-aware training of quantized neural networks. It tries to find the quantization range that provides the best results on the current neural network. In particular, the quantized neural network takes an input tensor that has precision X, provides an output that has precision Y (greater than precision X), obtains the quantization range, calculates the quantized output (precision X), determines an error between the quantized and the original output, and updates the quantization range based on this error.

However, none of the prior art methods, including QAT and PTQ, provides a universal solution to the aforementioned problems.

Thus, there is a need for a universal quantization-aware training that overcomes or reduces the problems of the existing methods. This need is addressed by the present disclosure.

The present disclosure relates to a method for quantization-aware training of a neural network including a neural network processing unit, NPU, the method comprising the following steps: obtaining a plurality of tensors of the neural network from an NPU inference; replacing the corresponding tensors during the training of the neural network with the plurality of tensors of the neural network from the NPU inference.

The present disclosure also relates to a method for quantization-aware training of a neural network including a neural network processing unit, NPU, the method comprising the following steps: obtaining a plurality of tensors of the neural network from an NPU inference; obtaining a plurality of tensors in a training framework of the training of the neural network; obtaining a plurality of noise tensors based on the difference between the plurality of tensors of the neural network from an NPU inference and the plurality of tensors in a training framework of the training of the neural network; and providing the plurality of noise tensors to the corresponding tensors during the training of the neural network.

That is, instead of replacing the corresponding tensors during the training of the neural network with the plurality of tensors of the neural network from the NPU inference, noise tensors are obtained and provided to the corresponding tensors according to an embodiment of the present disclosure. This has the additional advantage that the backward pass does not have to be modified. That is, no significant changes are required in the backward method of the layers, mainly because constant addition (of the noise) has zero gradient, so that it does not change the original derivative of the layer, the only difference will be the input and output of these backward functions.

Various embodiments may preferably implement the following features.

Preferably, obtaining the plurality of tensors in a training framework of the training of the neural network is executed in a forward pass of the training framework.

Preferably, obtaining a plurality of noise tensors is executed in a forward pass of the training framework.

Preferably, providing the plurality of noise tensors to the corresponding tensors during the training of the neural network is executed in a forward pass of the training framework.

Preferably, the plurality of noise tensors are obtained for each layer that exists on the NPU and provided to the output of the respective layer.

Preferably, the method further comprises applying a straight through estimator, STE, operation to the plurality of tensors in a training framework of the training of the neural network.

Preferably, the method further comprises determining whether a tensor in a forward pass has a value outside a predetermined quantization range; and setting the value in a backward pass to zero in case it is determined that the respective value is outside the predetermined quantization range.

Preferably, applying a straight through estimator, STE, comprises determining whether a tensor in a forward pass has a value outside a predetermined quantization range; and setting the value in a backward pass to zero in case it is determined that the respective value is outside the predetermined quantization range.

Preferably, the method further comprises determining the predetermined quantization range.

Preferably, the method further comprises providing a plurality of inputs to the neural network on the NPU.

Preferably, the method further comprises executing the NPU inference based on the plurality of inputs.

Preferably, the method further comprises obtaining loss and gradients in a backward pass.

Preferably, the method further comprises adjusting biases and weights of the neural network after replacing the corresponding tensors during the training of the neural network with the plurality of tensors of the neural network from the NPU inference or after providing the plurality of noise tensors to the corresponding tensors during the training of the neural network.

Preferably, the method is executed during or after an initial training of the neural network.

Preferably, only forward passes are executed by the NPU.

Using a training framework besides the NPU may be advantageous because the NPU does not need to calculate and execute backward passes. That is, the method in accordance with the present disclosure can be used with NPUs which are only able to execute forward passes.

Preferably, the NPU inference is executed by way of an NPU interface for a training framework that the neural network is trained in.

Preferably, the plurality of tensors of the neural network from the NPU inference comprise all tensors that exist in the neural network before and after compilation.

Preferably, providing the plurality of noise tensors comprises providing a constant tensor with zero gradient.

Preferably, the method further comprises obtaining a mapping between merged tensors and original tensors that exist in the training framework's original neural network, wherein the merged tensors are mapped to the last tensor that the merge was made of.

For a neural network to be executable by the NPU, a step called compilation may be executed. This step involves creating commands that can be understood by the NPU from the operations the network consists of. During this compilation process, a few optimization steps are also carried out: some of them may be executed for the network to be compatible with the NPU and some are just solely simplifications. For example, as most NPUs target inference, some tensors can be merged, e.g., every single convolution - batch normalization - ReLU block, as the latter ones can be merged into convolution by modifying its bias and weights.

The present disclosure also relates to a computer-implemented method comprising the steps of the method described above.

The present disclosure also relates to a computer program product comprising instructions which, when the program is executed by a computer, cause the computer to carry out the steps of the method as described above.

The exemplary embodiments disclosed herein are directed to providing features that will become readily apparent by reference to the following description when taken in conjunction with the accompanying drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in an exemplary order, and the present disclosure is not limited to the specific order or hierarchy presented unless expressly stated otherwise.

The above and other aspects and their implementations are described in greater detail in the drawings, the descriptions, and the claims.

The figures further define the present disclosure. Therein,
Fig. 1 shows a flowchart according to an embodiment of the present disclosure,
Fig. 2 shows a flowchart according to an embodiment of the present disclosure,
Fig. 3 shows a flowchart according to an embodiment of the present disclosure, and
Fig. 4 shows a flowchart according to an embodiment of the present disclosure.

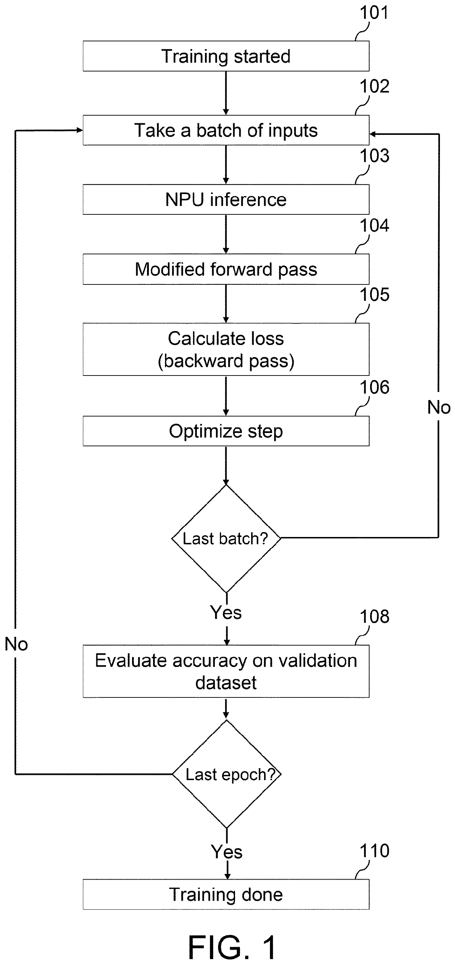

Fig. 1 shows a flowchart according to an embodiment of the present disclosure. The quantization-aware training according to the present disclosure is based on using, in the training process when quantization is applied, the actual quantized tensors from a neural network processing unit (NPU) instead of using a standard simulated 8- or less/more bit. This allows the training to be more specific to the NPU in question and gain more accuracy compared to known methods. For instance, if an NPU implements a unique quantization method that differs from the ones simulated in training frameworks, the potential accuracy improvement can be substantial.

The method will differ from the standard quantization aware training (QAT), inter alia, by an additional NPU inference. The method according to the present disclosure may be applied either during or after the initial training is done. In an embodiment, as will be shown, deployment may be done once the network is pretrained as NPU inferences may add a certain overhead.

In case, the method according to the present disclosure is applied on pretrained network it can also be considered a post-training quantization method. It is also worth mentioning that the network may be trained using 32-bit floating-point accuracy while utilizing the N-bit integer values.

The training process generally consists of epochs and iterations similarly to a normal floating-point training. Figure 1 shows the flowchart of an iteration in the training according to an embodiment of the present disclosure.

First, at 101, the training is started.

At 102 a batch of inputs is taken, which is a standard step in the training process.

With the inputs taken, an inference can be run on the NPU (step 103). In an embodiment, the specific NPU in question has an interface for the framework that the network is trained in. Next, the inputs can be uploaded to the NPU and the inference can be carried out.

Upon completion of the inference, all the tensors that exist in both the compiled neural network and the original one are saved in the training framework for further calculations. In an embodiment, these tensors will be used for calculating quantization noise existing between the floating-point tensors in the framework and the quantized tensors in the next step, which is the modified forward pass.

The present disclosure is not limited to the calculation and provision of noise. Direct provision of the tensors obtained by said inference is also envisaged by an embodiment of the present disclosure. That is, in an embodiment, using "raw" tensor data from the NPU instead of differences (noise) is possible. However, in the selected training framework (e.g. PyTorch) values coming from the NPU are just simple numbers, it is not known in the backward pass what operation output the tensors, so the developer may need to implement the gradient calculation for every case. This means copying the original operation's gradient implementation (for every type of operation). Even though the task itself is straightforward, it may need more coding than simply letting the framework take care of the gradient calculation in case of using noise.

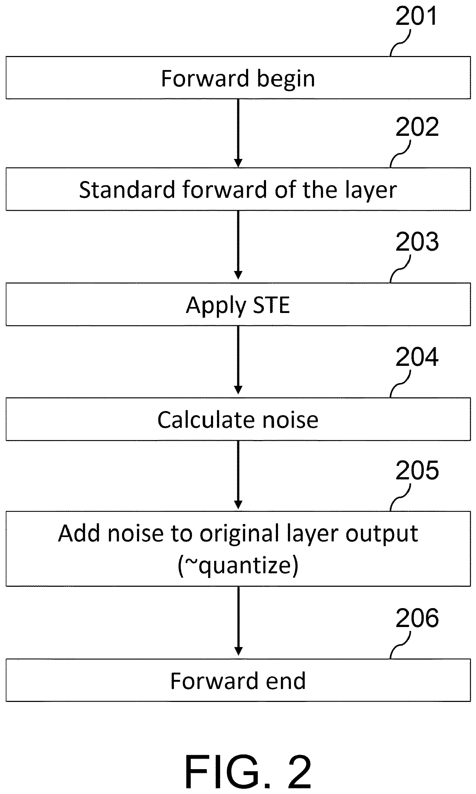

The modified forward pass in step 104 is different compared to a forward pass in a standard training process. The modified forward pass is described in more detail with reference to Fig. 2 in the following.

In an embodiment, the modified forward pass (for each layer) starts at step 201. First, a standard forward of the layer is executed (step 202).

Once the tensors are returned from the NPU, the noise tensors are ready to be calculated (step 204). As said before, these tensors will contain the difference between the original tensors in the training framework and the quantized tensors, calculated in floating-point.

Using noise instead of the quantized tensors directly is beneficial due to training frameworks generally having an automatic gradient calculator system in place, and using the quantized tensors would mean that one may also have to know the operation that output the tensor in question and implement the gradient calculation as mentioned above. According to the embodiment of Fig. 2, only the tensor values and the quantization noise are needed to be computed. This leads to noise tensors that will be added to the original floating-point tensor in the forward pass (step 205). The method of gradient calculation is correct, because a constant tensor is added, and constant addition has a zero gradient, so it will not influence the gradient calculation in the backward pass, only the values will be altered.

In an embodiment, an additional step is incorporated into the backward pass, because quantization is applied in the forward pass. The additional step is the use of a STE operator (Yoshua Bengio, Nicholas Léonard, and Aaron Courville. "Estimating or propagating gradients through stochastic neurons for conditional computation". In: arXiv preprint arXiv:1308.3432 (2013)). STE is an identity in the forward pass (step 203), as the quantization is done by adding the noise to the tensors. On the other hand, in the backward pass, if a tensor has a value that is out of the quantization range, that value in the gradient is zeroed out. This prevents the network to learn anything in that specific spot.

In other words, an additional STE operator is applied for the tensors of the original forward pass for calculating the "gradient of quantization". STE is the "derivative" of the quantization function. Since quantization does not have a gradient, it has to be estimated as is exemplarily shown in Penghang Yin et al. "Understanding Straight-Through Estimator in Training Activation Quantized Neural Nets". In: arXiv: 1903.05662 (2019). As mentioned above, the STE operator is an identity in the forward pass, as quantization is already done by complementing the training framework's output to the NPU's output. When the tensor before quantization is out of the quantization range, the network should not learn from this information, so the gradient is set to zero.

There is a possibility that some layers are merged during the NPU compatible compilation process of the utilized neural network, meaning that some tensors may be missing from the compiled neural network, that exists in the training framework's original neural network. In an embodiment, this can be bridged by creating a mapping between the merged tensors and the original ones. If the merged tensors are mapped to the last tensor that the merge was made of, the training can be carried out fluently.

The detailed description of step 104 (modified forward pass) is ended with step 206 where the forward pass is finished.

In an embodiment, once the modified forward pass is carried out, loss and gradients are calculated in the backward pass (step 105) and the optimizer that adjusts the biases and weights of the tensors is called (optimization step 106).

In an embodiment, at step 107, it is determined whether the last batch of inputs is reached. In the affirmative, the method proceeds to step 108. If it is determined that the last batch of inputs is not reached, the method returns to step 102 and repeats the subsequent steps for the current batch of inputs until the last batch of inputs is reached.

In an embodiment, at step 108, the accuracy on the validation dataset is evaluated.

In an embodiment, at step 109, it is determined whether the last epoch is reached. In the affirmative, the method proceeds to step 110. If it is determined that the last epoch is not reached, the method returns to step 102 and repeats the subsequent steps for the current epoch until the last epoch is reached.

In an embodiment, once the last iteration of the last epoch is reached, the training is stopped (step 110). In an embodiment, at the end of epochs, it can be useful to perform accuracy and loss calculations on the validation dataset, but this step can be omitted.

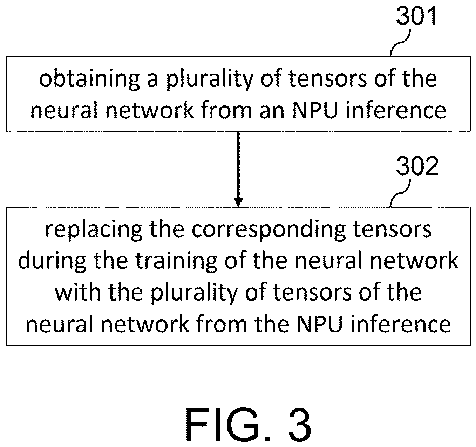

With reference to Fig. 3, an embodiment provides a method for quantization-aware training of a neural network including a neural network processing unit, NPU, the method comprising the following steps: obtaining a plurality of tensors of the neural network from an NPU inference (step 301); replacing the corresponding tensors during the training of the neural network with the plurality of tensors of the neural network from the NPU inference (step 302).

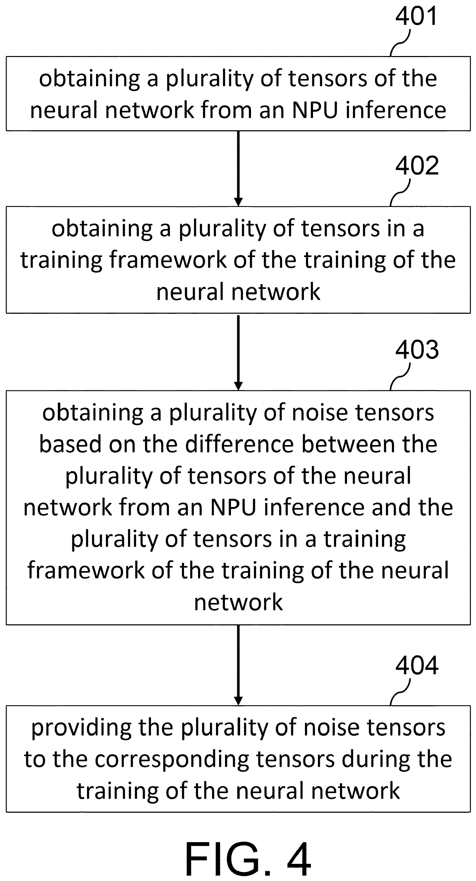

With reference to Fig. 4, an embodiment provides a method for quantization-aware training of a neural network including a neural network processing unit, NPU, the method comprising the following steps: obtaining a plurality of tensors of the neural network from an NPU inference (step 401); obtaining a plurality of tensors in a training framework of the training of the neural network (step 402); obtaining a plurality of noise tensors based on the difference between the plurality of tensors of the neural network from an NPU inference and the plurality of tensors in a training framework of the training of the neural network (step 403); and providing the plurality of noise tensors to the corresponding tensors during the training of the neural network (step 404).

In an embodiment, obtaining the plurality of tensors in a training framework of the training of the neural network is executed in a forward pass of the training framework.

In an embodiment, obtaining a plurality of noise tensors is executed in a forward pass of the training framework.

In an embodiment, providing the plurality of noise tensors to the corresponding tensors during the training of the neural network is executed in a forward pass of the training framework.

In an embodiment, the plurality of noise tensors are obtained for each layer and provided to the output of the respective layer.

In an embodiment, the method further comprises applying a straight through estimator, STE, operation to the plurality of tensors in a training framework of the training of the neural network.

In an embodiment, the method further comprises determining whether a tensor in a forward pass has a value outside a predetermined quantization range; and setting the value in a backward pass to zero in case it is determined that the respective value is outside the predetermined quantization range.

In an embodiment, applying a straight through estimator, STE, comprises determining whether a tensor in a forward pass has a value outside a predetermined quantization range; and setting the value in a backward pass to zero in case it is determined that the respective value is outside the predetermined quantization range.

In an embodiment, the method further comprises determining the predetermined quantization range.

In an embodiment, the method further comprises providing a plurality of inputs to the neural network on the NPU.

In an embodiment, the method further comprises executing the NPU inference based on the plurality of inputs.

In an embodiment, the method further comprises obtaining loss and gradients in a backward pass.

In an embodiment, the method further comprises adjusting biases and weights of the neural network after replacing the corresponding tensors during the training of the neural network with the plurality of tensors of the neural network from the NPU inference or after providing the plurality of noise tensors to the corresponding tensors during the training of the neural network.

In an embodiment, the method is executed during or after an initial training of the neural network.

In an embodiment, only forward passes are executed by the NPU.

Using a training framework beside the NPU may be advantageous because the NPU does not need to calculate and execute backward passes. That is, the method in accordance with the present disclosure can be used with NPUs which are only able to execute forward passes.

In an embodiment, the NPU inference is executed by way of an NPU interface for a training framework that the neural network is trained in.

In an embodiment, the plurality of tensors of the neural network from the NPU inference comprise all tensors that exist in the neural network before and after compilation.

In an embodiment, providing the plurality of noise tensors comprises providing a constant tensor with zero gradient.

In an embodiment, the method further comprises obtaining a mapping between merged tensors and original tensors that exist in the training framework's original neural network, wherein the merged tensors are mapped to the last tensor that the merge was made of.

In accordance with the embodiments of present disclosure, use of an NPU to run inferences, and use of the actual quantized tensors calculated there is proposed. Thereby, the arithmetics of the NPU may not be implemented for a GPU to carry out quantization-aware training. Rather, the already existing hardware is used. This way, it is also ensured that the outcomes will remain consistent when deploying the network to the target hardware, which is the NPU it was trained on.

Consequently, it verifies for the user that their network will work exactly as intended. Even in a worst-case scenario where the hardware has bugs, the network could still learn the problematic parts and work fine on the target hardware.

Once a neural network is trained in accordance with embodiments of the present disclosure, experiments showed improved accuracy compared to regular quantization-aware trainings when applied for quantized neural networks or post-training quantization methods. Besides, another advantage is that embodiments of the present disclosure provide generally a more stable and reliable solution for any NPU. There is no need for different methodologies for different NPU's.

Such experiments were carried out using an FPGA programmed to work like a neural network processing unit with 8-bit quantization technique. In the experiments, neural network MobileNetV1 (Andrew G Howard et al. "Mobilenets: Efficient convolutional neural networks for mobile vision applications". In: arXiv preprint arXiv:1704.04861 (2017)) was used.

The neural network was trained in Python in the PyTorch (Nikhil Ketkar et al. "Introduction to pytorch". In: Deep Learning with Python: Learn Best Practices of Deep Learning Models with PyTorch (2021), pp. 27-91.) 1.13 training framework on the ImageNet ILSVRC 2012-2017 (https://www.image-net.org) dataset for image classification. ImageNet was chosen, because all the default PyTorch networks and the MobileNetV1 implementation used (https://github.com/Lornatang/MobileNetV1-PyTorch) are pretrained on this dataset, therefore, only fine-tuning of the model according to the present disclosure was necessary, i.e. no label remapping or initial trainings were needed.

Preprocess parameters for the training dataset involved the normalization parameters displayed in the table below, random resized crop and random horizontal flip. For the validation dataset, the parameters were the same except for the random crop and the horizontal flip. Normalization parameters match with the initial training's preprocess.

| Channel | mean | std |
|---|---|---|
| 1 | 0.485 | 0.229 |
| 2 | 0.456 | 0.224 |
| 3 | 0.406 | 0.225 |

During the training process, cross-entropy loss (Zhilu Zhang and Mert Sabuncu. "Generalized cross entropy loss for training deep neural networks with noisy labels". In: Advances in neural information processing systems 31 (2018)) was used as a criterion and stochastic gradient descent (Shun-ichi Amari. "Backpropagation and stochastic gradient descent method". In: Neurocomputing 5.4-5 (1993), pp. 185-196) as an optimizer with a learning rate of 1⁻¹² for MobileNetV1, while the momentum was set to 0.9. Learning rate can seem a bit low, nonetheless as the neural network is only fine-tuned and the quantization noise can be quite high for some layers, it seemed to be a right choice after a few empirical tries. The training process ran for 1 epoch with batch size 32 on the 1.2 million images. An accuracy evaluation was carried out on the validation dataset every 512 iterations.

Accuracy comparison between the methods(namely post-training quantization (PTQ) and an embodiment of the present disclosure) can be seen in the following table.

| Method | Accuracy |
|---|---|
| Original FP32 | 68.79% |
| Original INT8 | 56.59% |
| PTQ | 61.00% |
| Present disclosure | 63.08% |

The accuracy scores for MobileNetV1 verify the statement that the quantization-aware training according to the present disclosure achieves better results than the original INT8 and the PTQ methods without including a hardware in the loop.

The training method described herein lets the network learn the quantization function, which is unique for the specific NPU, and adjust its weights and biases so that it minimizes the accuracy drop compared to floating point precision. The forward pass is computed in integers, while the numbers remain floating points in the backward pass. The method is universally applicable to all networks and hardware solutions, with a simple mapping between the NPU's and training framework's layers as a user input.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for quantization-aware training of a neural network including a neural network processing unit, NPU, the method comprising the following steps:
obtaining a plurality of tensors of the neural network from an NPU inference;
replacing the corresponding tensors during the training of the neural network with the plurality of tensors of the neural network from the NPU inference.

2. A method for quantization-aware training of a neural network including a neural network processing unit, NPU, the method comprising the following steps:
obtaining a plurality of tensors of the neural network from an NPU inference;
obtaining a plurality of tensors in a training framework of the training of the neural network;
obtaining a plurality of noise tensors based on the difference between the plurality of tensors of the neural network from an NPU inference and the plurality of tensors in a training framework of the training of the neural network; and
providing the plurality of noise tensors to the corresponding tensors during the training of the neural network.

3. The method according to claim 1 or 2, wherein obtaining the plurality of tensors in a training framework of the training of the neural network is executed in a forward pass of the training framework and/or wherein obtaining a plurality of noise tensors is executed in a forward pass of the training framework and/or wherein providing the plurality of noise tensors to the corresponding tensors during the training of the neural network is executed in a forward pass of the training framework.

4. The method according to claims 2 or 3, wherein the plurality of noise tensors are obtained for each layer and provided to the output of the respective layer.

5. The method according to any one of claims 1 to 4, further comprising:
determining whether a tensor in a forward pass has a value outside a predetermined quantization range; and
setting the value in a backward pass to zero in case it is determined that the respective value is outside the predetermined quantization range, and
preferably determining the predetermined quantization range.

6. The method according to any one of claims 1 to 5, further comprising:
providing a plurality of inputs to the neural network on the NPU, and
preferably executing the NPU inference based on the plurality of inputs.

7. The method according to any one of claims 1 to 6, further comprising:
obtaining loss and gradients in a backward pass.

8. The method according to any one of claims 1 to 7, further comprising:
adjusting biases and weights of the neural network after replacing the corresponding tensors during the training of the neural network with the plurality of tensors of the neural network from the NPU inference or after providing the plurality of noise tensors to the corresponding tensors during the training of the neural network.

9. The method according to any one of claims 1 to 8, wherein the method is executed during or after an initial training of the neural network.

10. The method according to any one of claims 1 to 9, wherein the NPU inference is executed by way of an NPU interface for a training framework that the neural network is trained in.

11. The method according to any one of claims 1 to 10, wherein only forward passes are executed by the NPU.

12. The method according to any one of claims 1 to 11, wherein the plurality of tensors of the neural network from the NPU inference comprise all tensors that exist in the neural network before and after compilation.

13. The method according to any one of claims 2 to 12, wherein providing the plurality of noise tensors comprises providing a constant tensor with zero gradient.

14. The method according to any one of claims 1 to 13, further comprising:
obtaining a mapping between merged tensors and original tensors that exist in the training framework's original neural network, wherein the merged tensors are mapped to the last tensor that the merge was made of.

15. A computer program product comprising instructions which, when the program is executed by a computer, cause the computer to carry out the steps of the method according to any one of claims 1 to 14.
